# EUROPEAN PATENT APPLICATION

(11) **EP 4 199 317 A1**
(43) Date of publication of application: **21.06.2023**
(21) Application number: 21215472.8
(22) Date of filing: 17.12.2021
(51) Int. Cl.: H02K 5/20, F04D 13/06, H02K 9/19, H02K 7/11, H02K 11/33

(54) **INTEGRATED ELECTRIC MOTOR DRIVE AND DRY RUNNER CENTRIFUGAL PUMP ASSEMBLY WITH SUCH AN INTEGRATED ELECTRIC MOTOR DRIVE**

(71) Applicant: Grundfos Holding A/S, 8850 Bjerringbro (DK)
(72) Inventor: Mikkelsen, Steen, 8850 Bjerringbro (DK); Jepsen, Troels, 8850 Bjerringbro (DK); Rasmussen, Keld Folsach, 8850 Bjerringbro (DK); Christoffersen, Kristian, 8850 Bjerringbro (DK)
(74) Representative: Patentanwälte Vollmann Hemmer Lindfeld Partnerschaft mbB

(57) **Abstract**

The present disclosure is directed to an integrated electric motor drive (5) comprising:
- rotatable parts comprising at least a drive shaft (23, 35) and a rotor (41), wherein the drive shaft (23, 35) extends along a rotor axis (R) and the rotor (41) is mechanically coupled to the drive shaft (23, 35); and
- static parts comprising at least a stator (43) and power electronics (45) for controlling an electric current through the stator (43),
characterised in that
the integrated electric motor drive (5) further comprises a liquid cooling system comprising a closed liquid cooling circuit (57) and a liquid coolant agitator (59),
wherein the closed liquid cooling circuit (57) is filled with liquid coolant being in direct or indirect thermal contact with the stator (43) and/or the power electronics (45),
wherein the liquid coolant agitator (59) is arranged and configured to circulate the liquid coolant along the closed liquid cooling circuit (57), wherein the liquid coolant agitator (59) is mounted within the closed liquid cooling circuit (57) to be rotatable about the rotor axis (R), and wherein the liquid coolant agitator (59) is magnetically coupled to one or more of the movable parts.

## Description

### TECHNICAL FIELD

The present disclosure is directed to an integrated electric motor drive and a dry runner centrifugal pump assembly comprising such an integrated electric motor drive. The pump assembly may be a single stage or multistage centrifugal pump, in particular for pumping water or another fluid. The motor drive may preferably comprise a permanent magnet synchronous motor (PMSM).

### BACKGROUND

Typically, there is a general interest in designing pumps as compact as possible. Usually, an integrated electric motor drive is often a large or even the largest part of a pump assembly. It is a technical challenge to reduce the size of the integrated electric motor drive without limiting its output power. In particular, cooling of the stator and/or power electronics becomes more challenging the more compact the integrated electric motor drive is designed.

US 6,322,332 B1 describes a device for the external cooling of the electric drive motor of a dry runner centrifugal pump unit. The cooling device of US 6,322,332 B1, however, increases the outer dimensions of the electric drive motor and only cools the stator, but not power electronics that control an electric current through the stator.

It is therefore an object of the present disclosure to provide a more compact and efficient powerful integrated electric motor drive for a dry runner centrifugal pump assembly.

### SUMMARY

According to a first aspect of the present disclosure, an integrated electric motor drive is provided comprising:
- rotatable parts comprising at least a drive shaft and a rotor, wherein the drive shaft extends along a rotor axis and the rotor is mechanically coupled to the drive shaft; and
- static parts comprising at least a stator and power electronics for controlling an electric current through the stator.
The integrated electric motor drive is characterised in that the integrated electric motor drive further comprises a liquid cooling system comprising a closed liquid cooling circuit and a liquid coolant agitator, wherein the closed liquid cooling circuit is filled with liquid coolant being in direct or indirect thermal contact with the stator and/or the power electronics, wherein the liquid coolant agitator is arranged and configured to circulate the liquid coolant along the closed liquid cooling circuit, wherein the liquid coolant agitator is mounted within the closed liquid cooling circuit to be rotatable about the rotor axis, and wherein the liquid coolant agitator is magnetically coupled to one or more of the movable parts. Preferably, the rotor and stator form a permanent magnet synchronous motor (PMSM), i.e., the rotor comprises one or more permanent magnets.

Tests have shown that the cooling by the liquid cooling system with the agitated liquid coolant is able to improve the efficiency of the motor drive so significantly that it can be reduced in size significantly compared to an air-cooled motor drive providing the same desired maximum power. The efficiency gain by the liquid cooling system with the agitated liquid coolant in the closed liquid cooling circuit may be up to 50% or more, which allows for significantly smaller motor drive designs, or for a higher maximum power without making the motor drive larger.

Optionally, the liquid coolant agitator may be a hub-less propeller wheel ringing the drive shaft. This allows for a compact design and simple assembly process. Furthermore, the risk of frictional wear and blockage is reduced, which is beneficial in terms of longevity and maintenance. In addition, the energy consumption for driving the liquid coolant agitator becomes negligible.

Optionally, the stator may be enclosed in a stator housing, wherein at least parts of the stator housing form a thermally conductive wall between the stator and the closed liquid cooling circuit. Thereby, the stator is protected from direct contact with the liquid coolant, but in indirect thermal contact with the liquid coolant via the thermally conductive wall of the stator housing. Preferably, the stator is fully inserted or cast by a thermally conductive material hermetically sealing the stator from the coolant and forming the stator housing. The thermally conductive material of the stator housing may comprise a metal, preferably aluminium, and/or a composite material comprising a polymer and thermally conductive additives.

Optionally, the integrated electric motor drive may further comprise a motor housing enclosing the stator and the power electronics, wherein at least parts of the motor housing form a wall of the closed liquid cooling circuit, such that liquid coolant flows between the stator and the motor housing. This is beneficial to keep the variety of parts at a minimum, because there is no need for a dedicated channel to provide the closed liquid cooling circuit. A void between the motor housing and the stator or the stator housing may be filled by the liquid coolant and preferably serves as the closed liquid cooling circuit. The material of the motor housing may differ from the material of the stator housing, because thermal conductivity is not particularly desirable for the motor housing. More important for the motor housing is high stability, low inflammability, and low water permeability. The material of the motor housing may thus be a composite material comprising a polymer and preferably reinforcing additives, such as glass fibre.

Optionally, a first section of the closed liquid cooling circuit may extend between the stator and the power electronics, so that the liquid coolant is in direct or indirect thermal contact with both the stator and the power electronics. That first section of the closed liquid cooling circuit preferably extends radially inward at a first axial end of the stator where the power electronics are located. That first axial end of the stator is preferably opposite to a second axial end of the stator facing towards a pump housing being coupled to the integrated electric motor drive. The motor housing may define an electronics compartment above the first axial end of the stator. Alternatively, an electronics housing defining an electronics compartment in form of a cup-shaped cap may be arranged at and connected to an axial end of the motor housing for complementing the motor housing.

Optionally, a second section of the closed liquid cooling circuit may extend along a helix around the stator. That second section is preferably arranged downstream of the first section extending between the stator and the power electronics. Preferably, the second section of the closed liquid cooling circuit extends downwards towards the second axial side of the stator facing a pump housing being coupled to the integrated electric motor drive.

Optionally, the integrated electric motor drive may further comprise a heat sink and a fan, wherein the heat sink is arranged in direct or indirect thermal contact with the liquid coolant, and wherein the fan is arranged to drive cooling air along the heat sink. This is advantageous to avoid condensation and to improve the cooling effect. Preferably, the heat sink is arranged upstream of the first section of the closed liquid cooling circuit extending between the stator and the power electronics. Thereby, the liquid coolant has the lowest temperature when it leaves the heat sink and enters the first section of the closed liquid cooling circuit extending between the stator and the power electronics. Thereby, the cooling effect of the liquid coolant is largest when the liquid coolant is in direct or indirect thermal contact with the power electronics.

Optionally, the fan may be mechanically coupled to the drive shaft. Preferably, the fan is arranged at an axial side of the integrated electric motor drive that faces toward a pump housing coupled to the integrated electric motor drive. The fan is preferably arranged to suck in ambient air as a cooling air flow guided along the heat sink towards the fan. The heat sink may preferably be arranged at a lateral side of the integrated electric motor drive.

Optionally, the stator and/or the closed liquid cooling circuit may be arranged axially between the power electronics and the fan. So, the power electronics and the fan are preferably arranged at opposite axial ends of the integrated electric motor drive.

Optionally, the heat sink may comprise cooling fins extending parallel to the rotor axis and outside of a motor housing that encloses the stator and the power electronics, wherein the cooling fins are laterally closed to define at least a section of a cooling air flow path towards or away from the fan. In particular, the laterally closed cooling fins are beneficial for a cooling air flow path towards the fan, wherein the fan sucks in ambient air into a cooling airflow path defined at least partly by the laterally closed cooling fins along the heat sink, where it takes up heat from the heat sink, towards the fan and then transports the heated air radially outward away from the integrated electric motor drive. The cooling fins of the heat sink may preferably extend axially along a lateral side of the integrated electric motor drive. The cooling fins may have a cooling air inlet arranged at an axial end of the cooling fins that faces away from the fan. The other axial end of the cooling fins may be fluid connected with a radially extending section of the cooling airflow path that guides the cooling air towards a suction inlet eye of the fan. That radially extending section of the cooling airflow path may be at least partly defined by the motor housing.

Optionally, the fan may comprise a suction inlet eye in fluid connection with the cooling airflow path to suck in ambient air through the cooling airflow path along the cooling fins. So, the heat sink is arranged upstream of the fan in the cooling airflow path.

Optionally, the fan may be a radial fan arranged outside of a motor housing that encloses the stator and the power electronics. The motor housing may define at least a section of the cooling air flow path towards or away from the fan.

According to a second aspect of the present disclosure, a dry runner centrifugal pump assembly is provided comprising a pump housing and an integrated electric motor drive according to the first aspect of the present disclosure, wherein the pump housing encloses an impeller, wherein the drive shaft of the integrated electric motor drive is mechanically coupled to the impeller for pumping fluid from a pump housing inlet towards a pump housing outlet.

Optionally, the dry runner centrifugal pump assembly may further comprise a motor stool mechanically connecting the motor housing of the integrated electric motor drive to the pump housing, wherein the integrated electric motor drive comprises a fan being circumferenced by the motor stool. Preferably, the motor stool has lateral openings through which the fan can exhaust cooling air that was heated up by a heat sink of the integrated electric motor drive.

Optionally, the dry runner centrifugal pump assembly may further comprise a shaft seal for sealing the pump housing and allowing mechanical coupling between the impeller and the drive shaft.

### SUMMARY OF THE DRAWINGS

Embodiments of the present disclosure will now be described by way of example with reference to the following figures of which:
- Fig. 1: shows a partially cut perspective view of an example of an embodiment of a dry runner centrifugal pump assembly according to the present disclosure;
- Fig. 2: shows an exploded view of the parts of an example of an embodiment of a dry runner centrifugal pump assembly according to the present disclosure;
- Fig. 3: shows a partial side view of the integrated electric motor drive of the dry runner centrifugal pump assembly according to Fig. 1;
- Fig. 4: shows a partial cut perspective view of the integrated electric motor drive of the dry runner centrifugal pump assembly according to Figs. 1 and 3 with an indicated closed liquid cooling circuit; and
- Fig. 5: shows the integrated electric motor drive of Fig. 4 with a motor housing being stripped off.

### DETAILED DESCRIPTION

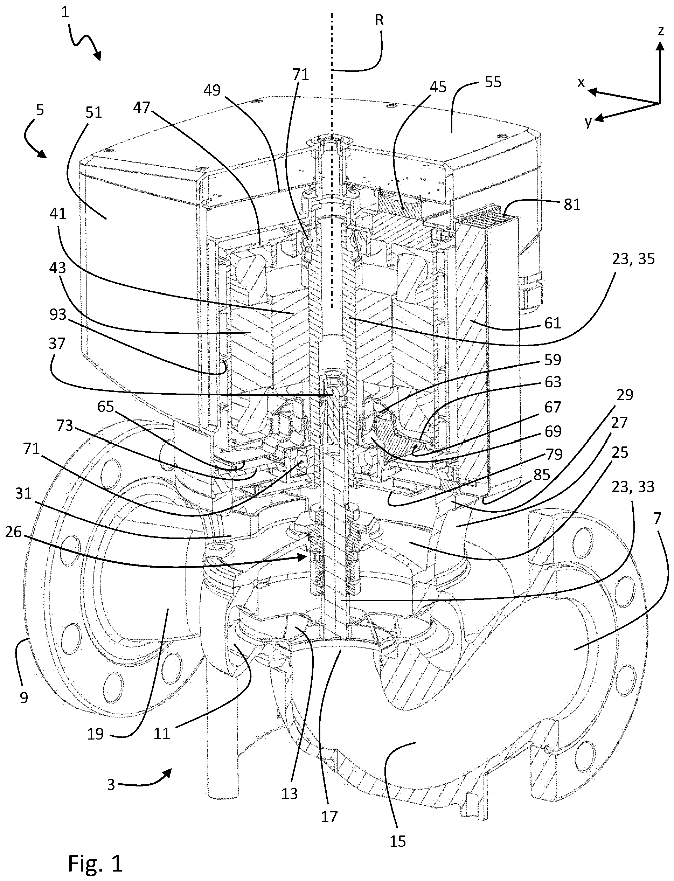

Fig. 1 shows a dry runner centrifugal pump assembly 1 comprising a pump housing 3 and an integrated electric motor drive 5 comprising a permanent magnet synchronous motor (PMSM). The pump assembly 1 is configured to be installed at a fluid pipe (not shown) in order to drive a flow of a fluid, e.g., water, from a pump housing inlet 7 towards a pump housing outlet 9. The pump housing inlet 7 and the pump housing outlet 9 are arranged coaxially to each other at opposite sides of the pump housing 3. Thereby, the pump assembly 1 can be installed at a straight section of a fluid pipe. The pump housing inlet 7 and the pump housing outlet 9 each comprise a connection flange for fluid-tight connection with a fluid pipe. The pump housing 3 further defines a pump housing chamber 11 arranged between the pump housing inlet 7 and the pump housing outlet 9. The pump housing chamber 11 encloses an impeller 13 that is rotatable about a rotor axis R within the pump housing chamber 11. The pump housing 3 further defines a suction path 15 guiding the fluid from the pump housing inlet 7 towards a suction mouth 17 of the impeller 13. The pump housing 3 further defines a pressure path 19 guiding the fluid that radially exits the impeller 13 along a volute path towards the pump housing outlet 9.

In order to facilitate the description of the arrangement of the components of the pump assembly 1 relative to each other, Fig. 1 shows a right-handed Cartesian coordinate system, of which the z-axis is arbitrarily chosen to extend along the rotor axis R. The x-axis is arbitrarily chosen to be the coaxial axis of the pump housing inlet 7 and the pump housing outlet 9 pointing from the pump housing inlet 7 towards the pump housing 9. The y-axis is a lateral axis perpendicular to a xz-plane spanned by the x-axis and the z-axis. Preferably, the pump assembly 1 is a vertical pump, i.e., the rotor axis R is the vertical axis z. Thus, the z-axis points vertically upward. The x-axis and the y-axis span a horizontal xy-plane. It should be noted that the pump assembly 1 may be installed in any spatial orientation; Fig. 1 merely shows a preferred embodiment with a vertical rotor axis R. Therefore, spatial terms like "upper", "lower", "above", and "below" etc. refer to an embodiment with a z-axis pointing vertically upward. The terms "axial", "lateral" shall refer to the rotor axis R if not specified otherwise.

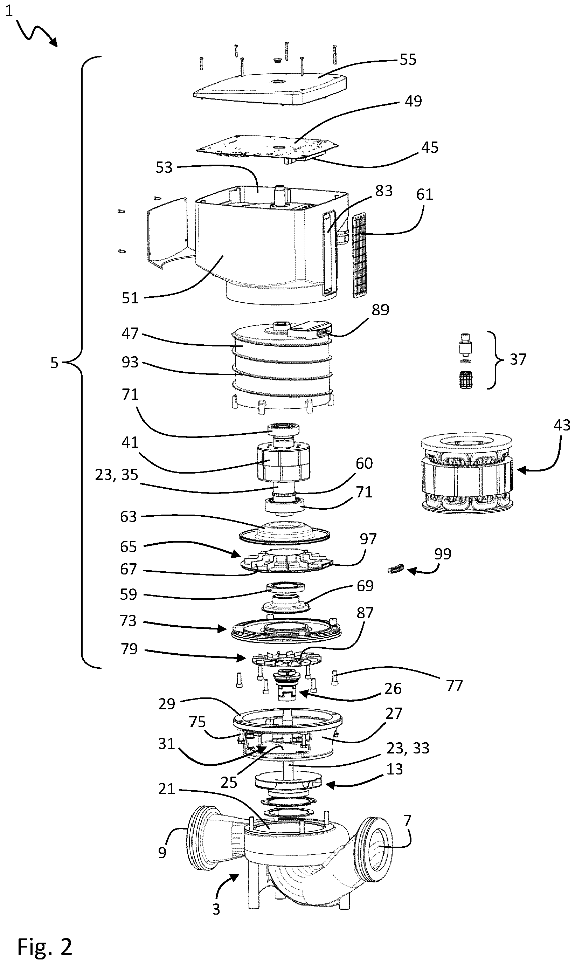

The pump housing 3 comprises an upper opening 21 (see Fig. 2) for inserting the impeller 13 when the pump is assembled. The impeller 13 is mechanically coupled to a drive shaft 23 extending along the rotor axis R vertically upward out of the pump housing chamber 11. The upper opening 21 of the pump housing chamber 11 is sealingly closed by a pump housing lid 25. The pump housing lid 25 acts as a carrier for a shaft seal element 26 that functions as a shaft seal for the drive shaft 23 protruding out of the pump housing chamber 11.

The integrated electric motor drive 5 is releasably mechanically coupled to the pump housing 3 by means of a motor stool 27. In the embodiments shown, the pump housing lid 25 is an integral part of the motor stool 27 and/or formed by it. Alternatively, the pump housing lid 25 and the motor stool 27 may be separate parts. The motor stool 27 defines an upper mounting flange 29 (see Fig. 2) for releasably mounting the integrated electric motor drive 5 thereon. The motor stool 27 has lateral openings 31 (see Fig. 2). The opening 31 allows access to fixing screws, to have free sight to inspect the shaft seal element 26, to see the drive shaft 23 rotation, and to allow exhaustion of cooling air that was heated up by a heat sink of the integrated electric motor drive 5. The last point will be explained in more detail below.

It should be noted that the drive shaft 23 has two coaxially arranged sections that are releasably coupled to each other to transfer torque: a lower pump drive shaft 33 and an upper motor drive shaft 35. The pump drive shaft 33 extends from the pump housing 3 towards the integrated electric motor drive 5. The motor drive shaft 35 extends within the integrated electric motor drive 5 and may or may not protrude at a lower axial end of the integrated electric motor drive 5. There is a specific releasable shaft coupling 37 between the pump drive shaft 33 and the motor drive shaft 35 that is subject of a separate patent application. The releasable shaft coupling 37 may be arranged within the integrated electric motor drive 5 (as shown in Fig. 1) or within the motor stool 27.

The integrated electric motor drive 5 comprises rotatable parts and static parts. The rotatable parts comprise the motor drive shaft 35 and a rotor 41. The motor drive shaft 35 extends along the rotor axis R and the rotor 41 is mechanically coupled to the motor drive shaft 35. The static parts comprise a stator 43 and power electronics 45 for controlling an electric current through the stator 43. The stator 43 surrounds the rotor 41. The stator 43 is enclosed by a stator housing 47, which preferably comprises a thermally conductive material, e.g. aluminium. The power electronics 45 are arranged on a printed circuit board (PCB) 49 extending essentially perpendicular to the rotor axis R, i.e., in a horizontal xy-plane, in an upper axial and portion of the integrated electric motor drive 5. The integrated electric motor drive 5 further comprises a motor housing 51 enclosing the stator housing 47 with the stator 43 and the PCB 49 with the power electronics 45. An upper opening 53 (see Fig. 2) of the motor housing 51 is closed by a motor housing lid 55. The motor housing 51 and/or the motor housing lid 55 are preferably made of a material comprising a polymer and/or composite material. The power electronics 45 define a heat dissipation surface facing downward from the PCB 49 towards the stator housing 47 in order to provide a direct or indirect thermal contact face for cooling purposes.

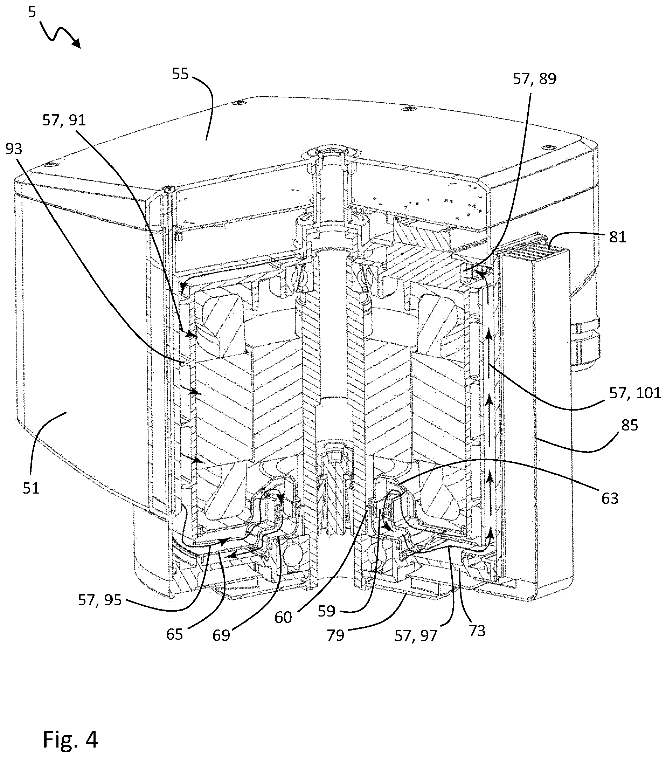

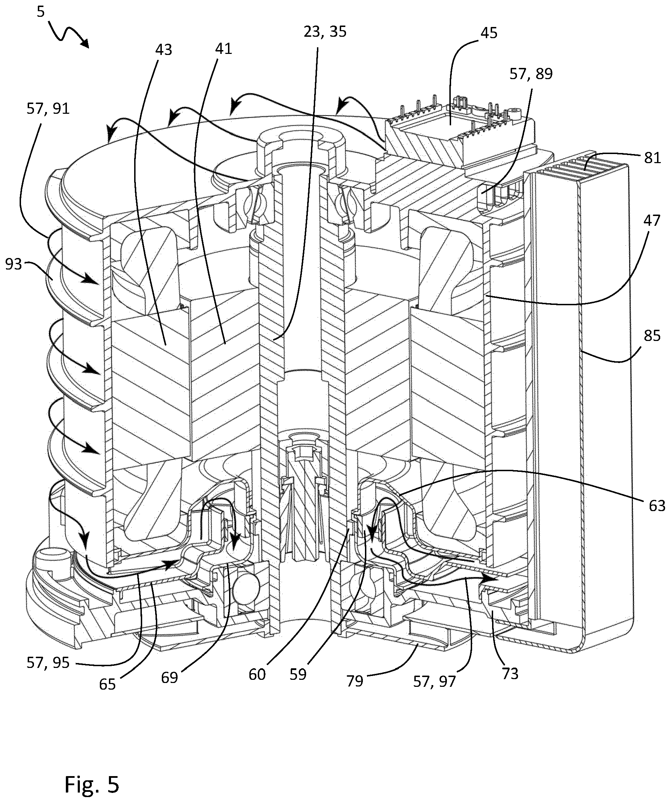

The integrated electric motor drive 5 further comprises a liquid cooling system comprising a closed liquid cooling circuit 57 (see arrows in Figs. 4 and 5) and a liquid coolant agitator 59. The closed liquid cooling circuit 57 is filled with liquid coolant being in direct or indirect thermal contact with the stator 43 and/or the power electronics 45. The term "direct or indirect thermal contact" shall mean herein that there is no air gap or heat insulating material interposed. The term "direct or indirect thermal contact" shall include embodiments with one or more thermally conductive material(s) interposed.

The liquid coolant agitator 59 is arranged axially below the rotor 41 and configured to circulate the liquid coolant along the closed liquid cooling circuit 57. The liquid coolant agitator 59 is mounted within the closed liquid cooling circuit 57 to be rotatable about the rotor axis R; and it is magnetically coupled to one or more of the movable parts, e.g., here the motor drive shaft 35. In the shown embodiments, the liquid coolant agitator 59 is a hub-less propeller wheel ringing the motor drive shaft 35. The motor drive shaft 35 is equipped with two or more magnets and/or ferromagnetic sections 60, which are circumferentially distributed about the rotor axis R. The liquid coolant agitator 59 comprises corresponding magnets and/or ferromagnetic sections arranged around the magnets and/or ferromagnetic sections 60 of the motor drive shaft 35 within magnetic coupling range. The liquid coolant agitator 59 further comprises vanes defining fluid channels for driving the coolant flow in axial direction (see Figs. 4 and 5).

The exploded view of Fig. 2 shows an embodiment that only differs from the embodiment of Fig. 1 in the design of a heat sink 61 of the integrated electric motor drive 5. Fig. 2 shows some aspects of the components of the pump assembly 1 clearer than Fig. 1. For example, a lower axial opening of the stator housing 47 is closed by a stator housing bottom 63 to seal the stator 43 from the coolant from below. The stator housing bottom 63 may comprise a thermally conductive material, which may be the same material that the stator housing 47 comprises. Preferably, however, the stator housing bottom 63 is electrically insulating and thus preferably polymer a polymer and/or composite material, whereas the stator housing 47 is preferably made of aluminium. There is also a coolant guiding element 65 arranged axially below the stator housing bottom 63 and ringing the liquid coolant agitator 59. An axial distance between the stator housing bottom 63 and the coolant guiding element 65 is defined by radially extending upward fins 67 of the coolant guiding element 65. An essentially radial section of the closed liquid cooling circuit 57 is defined laterally by the void between the fins 67, the coolant guiding element 65 from below, and by the stator housing bottom 63 at the top.

The liquid coolant agitator 59 is mounted on an agitator carrier 69, which rest on an axial top face of a lower one of radial rotor bearings 71. A top one of the radial rotor bearings 71 is located at an axial top end of the stator housing 47. The lower radial rotor bearing 71 is supported from below by a motor housing bottom 73 closing the motor housing 51 from below. The motor housing bottom 73 is preferably a structurally strong component made of metal, e.g., aluminium or steel. The motor housing bottom 73 provides a mounting flange to be coupled by screws 75 to the upper mounting flange 29 of the motor stool 27 and provides bore holes for mounting the stator housing 47 to the motor housing bottom 73 by screws 77.

The integrated electric motor drive 5 further comprises a radial fan 79 arranged axially below the motor housing bottom 73, i.e., outside of the motor housing 51 and circumferenced by the motor stool 27. The fan 79 is mechanically coupled to a bottom end section of the motor drive shaft 35 in order to rotate therewith.

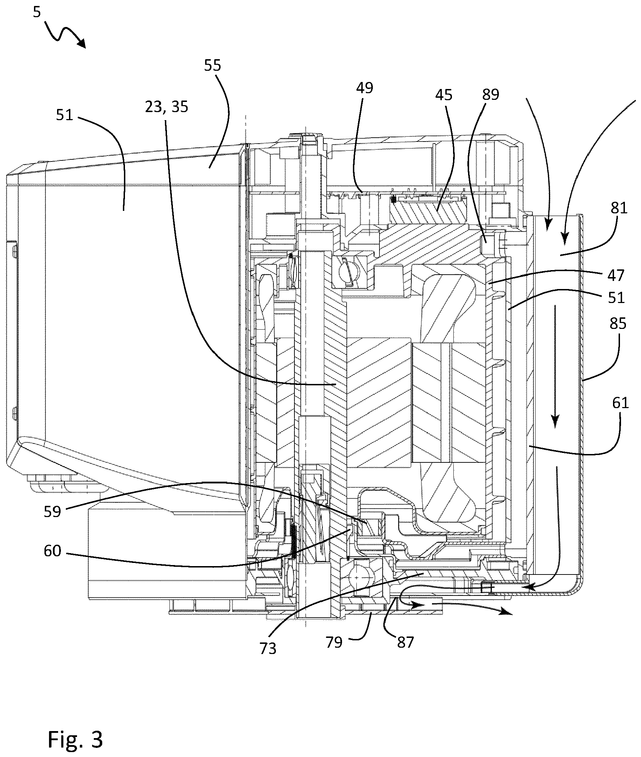

Fig. 3 shows a cooling air flow path indicated by arrows. The cooling air flow is driven by the fan 79 sucking ambient air in and exhausting it radially through the lateral openings 31 of the motor stool 27 (see Figs. 1 and 2). An axial section of the cooling air flow path is defined by axially extending cooling fins 81 (see Figs. 4 and 5) of the heat sink 61. The heat sink 61 preferably comprises a thermally conductive material, e.g. metal. The heat sink 61 closes a lateral opening 83 (see Fig. 2) in the motor housing 51. Thereby, it forms a wall of the closed liquid cooling circuit 57 within the motor housing 51. Thus, the heat sink 61 is arranged in direct or indirect thermal contact with the liquid coolant circulating in the closed liquid cooling circuit 57. The heat sink 61 may thus receive heat from the liquid coolant and is cooled by an the cooling air flow path downward along its cooling fins 81. In order to ensure a maximal long cooling airflow path along the cooing fins 81, the cooling fins 81 are laterally closed by a guiding wall 85. A top end of the colling fins 81 forms a cooling air inlet, where ambient cooling air enters the cooling air flow path. At a bottom end of the cooling fins 81, the guiding wall 85 guides the cooling air flow radially inward towards a suction inlet eye 87 of the fan 79. The radially inward cooling air flow also cools the motor housing bottom 73 from below.

Figs. 4 and 5 show the closed liquid cooling circuit 57 indicated by arrows. The liquid coolant is coolest when it leaves the wall defined by the heat sink 61, i.e., at an upper axial end of the stator housing 47. The stator housing 47 therefore defines a first section 89 of the closed liquid cooling circuit 57 by one or more channels 89. The channels 89 extend essentially radially inward. The channels 89 further define an essentially horizontal heat dissipation surface in direct or indirect thermal contact with the heat dissipation surface of the power electronics 45. The thermal contact between the power electronics 45 and the channels 89 may be facilitated by a heat conductive paste or pad between them. After the liquid coolant has absorbed heat in the channels 89 it is guided radially outward to a second section 91 of the closed liquid cooling circuit 57 extending along a helix around the stator housing 47. The stator housing 47 comprises one or more helix-shaped lateral guiding fins 93 defining the second section 91 of the closed liquid cooling circuit 57. The second section 91 of the closed liquid cooling circuit 57 circulates around the stator housing 47 four or more times along the second section 91 of the closed liquid cooling circuit 57 before it reaches a bottom axial end of the stator housing 47. Thereby, the stator 43 is efficiently cooled via the thermally conductive stator housing 47.

At the bottom axial end of the stator housing 47, a third section 95 of the closed liquid cooling circuit 57 extends radially inward towards the liquid coolant agitator 59. The third section 95 of the closed liquid cooling circuit 57 extends between the stator housing bottom 63 and the coolant guiding element 65; and is defined by defined laterally by the void between the fins 67, the coolant guiding element 65 from below, and by the stator housing bottom 63 at the top. The stator housing bottom 63 is formed to guide the liquid coolant axially downward into the liquid coolant agitator 59. The propelling liquid coolant agitator 59 drives the liquid coolant downward into a fourth section 97 of the closed liquid cooling circuit 57 extending radially outward towards the heat sink 61. The coolant guiding element 65 defines a radial coolant outlet 99 for this. The fourth section 97 of the closed liquid cooling circuit 57 is defined laterally and from top by the coolant guiding element 65, and by the motor housing bottom 73 from below. The liquid coolant exits the radial coolant outlet 99 of the coolant guiding element 65 into a vertically upward fifth section 101 of the closed liquid cooling circuit 57. The fifth section 101 of the closed liquid cooling circuit 57 has a wall that is defined by the heat sink 61. Therefore, the liquid coolant is able to dissipate the heat absorbed along the previous sections of the closed liquid cooling circuit 57. The upper end of the fifth section 101 of the closed liquid cooling circuit 57 turns into the first section 89 to close the liquid cooling circuit 57. It should be noted that the motor housing 51 forms a wall between the helix second section 91 of the closed liquid cooling circuit 57 and the vertical fifth section 101 of the closed liquid cooling circuit 57 (the motor housing is not shown in Fig. 5).

Where, in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional, preferable, advantageous, convenient or the like are optional and do not limit the scope of the independent claims.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. While at least one exemplary embodiment has been shown and described, it should be understood that other modifications, substitutions and alternatives are apparent to one of ordinary skill in the art and may be changed without departing from the scope of the subject matter described herein, and this application is intended to cover any adaptations or variations of the specific embodiments discussed herein.

In addition, "comprising" does not exclude other elements or steps, and "a" or "one" does not exclude a plural number. Furthermore, characteristics or steps which have been described with reference to one of the above exemplary embodiments may also be used in combination with other characteristics or steps of other exemplary embodiments described above. Method steps may be applied in any order or in parallel or may constitute a part or a more detailed version of another method step. It should be understood that there should be embodied within the scope of the patent warranted hereon all such modifications as reasonably and properly come within the scope of the contribution to the art. Such modifications, substitutions and alternatives can be made without departing from the spirit and scope of the disclosure, which should be determined from the appended claims and their legal equivalents.

### List of reference numerals:

- 1: dry runner centrifugal pump assembly
- 3: pump housing
- 5: integrated electric motor drive
- 7: pump housing inlet
- 9: pump housing outlet
- 11: pump housing chamber
- 13: impeller
- 15: suction path
- 17: suction mouth
- 19: pressure path
- 21: upper opening of pump housing
- 23: drive shaft
- 25: pump housing lid
- 26: shaft seal element
- 27: motor stool
- 29: upper mounting flange
- 31: lateral opening of motor stool
- 33: pump drive shaft
- 35: motor drive shaft
- 37: shaft coupling
- 41: rotor
- 43: stator
- 45: power electronics
- 47: stator housing
- 49: PCB
- 51: motor housing
- 53: upper opening of motor housing
- 55: motor housing lid
- 57: closed liquid cooling circuit
- 59: liquid coolant agitator
- 61: heat sink
- 63: stator housing bottom
- 65: coolant guiding element
- 67: fins of coolant guiding element
- 69: agitator carrier
- 71: radial rotor bearings
- 73: motor housing bottom
- 75: screws
- 77: screws
- 79: fan
- 81: cooling fins
- 83: lateral opening of motor housing
- 85: guiding wall
- 87: suction inlet eye of the fan
- 89: first section of closed liquid cooling circuit / channels
- 91: second section of closed liquid cooling circuit
- 93: guiding fins
- 95: third section of closed liquid cooling circuit
- 97: fourth section of closed liquid cooling circuit
- 99: radial coolant outlet
- 101: fifth section of closed liquid cooling circuit
- R: rotor axis
- z: vertical axis
- x: coaxial axis of the pump housing inlet and outlet
- y: lateral horizontal axis

## Claims

1. An integrated electric motor drive (5) comprising:
- rotatable parts comprising at least a drive shaft (23, 35) and a rotor (41), wherein the drive shaft (23, 35) extends along a rotor axis (R) and the rotor (41) is mechanically coupled to the drive shaft (23, 35); and
- static parts comprising at least a stator (43) and power electronics (45) for controlling an electric current through the stator (43),
**characterised in that**
the integrated electric motor drive (5) further comprises a liquid cooling system comprising a closed liquid cooling circuit (57) and a liquid coolant agitator (59),
wherein the closed liquid cooling circuit (57) is filled with liquid coolant being in direct or indirect thermal contact with the stator (43) and/or the power electronics (45),
wherein the liquid coolant agitator (59) is arranged and configured to circulate the liquid coolant along the closed liquid cooling circuit (57),
wherein the liquid coolant agitator (59) is mounted within the closed liquid cooling circuit (57) to be rotatable about the rotor axis (R), and
wherein the liquid coolant agitator (59) is magnetically coupled to one or more of the movable parts.

2. The integrated electric motor drive (5) according to claim 1, wherein the liquid coolant agitator (59) is a hub-less propeller wheel ringing the drive shaft (R).

3. The integrated electric motor drive (5) according to claim 1 and 2, wherein the stator (43) is enclosed in a stator housing (47), wherein at least parts of the stator housing (47) form a thermally conductive wall between the stator (43) and the closed liquid cooling circuit (57).

4. The integrated electric motor drive (5) according to any of the preceding claims, further comprising a motor housing (51) enclosing the stator (43) and the power electronics (45), wherein at least parts of the motor housing (51) form a wall of the closed liquid cooling circuit (57), such that liquid coolant flows between the stator (43) and the motor housing (51).

5. The integrated electric motor (5) drive according to any of the preceding claims, wherein a section (89) of the closed liquid cooling circuit (57) extends between the stator (43) and the power electronics (45), so that the liquid coolant is in direct or indirect thermal contact with both the stator (43) and the power electronics (45).

6. The integrated electric motor drive (5) according to any of the preceding claims, wherein a section (91) of the closed liquid cooling circuit (57) extends along a helix around the stator (43).

7. The integrated electric motor drive (5) according to any of the preceding claims, further comprising a heat sink (61) and a fan (79), wherein the heat sink (61) is arranged in direct or indirect thermal contact with the liquid coolant, and wherein the fan (79) is arranged to drive a cooling air flow along the heat sink (61).

8. The integrated electric motor drive (5) according to claim 7, wherein the fan (79) is mechanically coupled to the drive shaft (23, 35).

9. The integrated electric motor drive (5) according to claims 7 or 8, wherein the stator (43) and/or the closed liquid cooling circuit (57) is arranged axially between the power electronics (45) and the fan (79).

10. The integrated electric motor drive (5) according to any of the claims 7 to 9, wherein the heat sink (61) comprises cooling fins (81) extending parallel to the rotor axis (R) and outside of a motor housing (51) that encloses the stator (43) and the power electronics (45), wherein the cooling fins (81) are laterally closed to define at least a section of a cooling air flow path towards or away from the fan (79).

11. The integrated electric motor drive (5) according to claim 10, wherein the fan (79) comprises a suction inlet eye (87) in fluid connection with the cooling air flow path to suck in ambient air through the cooling air flow path along the cooling fins (81).

12. The integrated electric motor drive (5) according to claim 10 or 11, wherein the fan (79) is a radial fan arranged outside of a motor housing (51) that encloses the stator (43) and the power electronics (45).

13. A dry runner centrifugal pump assembly (1) comprising a pump housing (3) and an integrated electric motor drive (5) according to any of the preceding claims coupled to the pump housing (3), wherein the pump housing (3) encloses an impeller (13), wherein the drive shaft (23, 35) of the integrated electric motor drive (5) is mechanically coupled to the impeller (13) for pumping fluid from a pump housing inlet (7) towards a pump housing outlet (9).

14. The dry runner centrifugal pump assembly (1) according to claim 13, further comprising a motor stool (27) mechanically connecting a motor housing (51) of the integrated electric motor drive (5) to the pump housing (3), wherein the integrated electric motor drive (5) comprises a fan (79) being circumferenced by the motor stool (27).

15. The dry runner centrifugal pump assembly (1) according to claim 13 or 14, further comprising a shaft seal element (26) for sealing the pump housing (3) and allowing mechanical coupling between the impeller (13) and the drive shaft (23, 35).
